# EUROPEAN PATENT APPLICATION

(11) **EP 4 621 207 A1**
(43) Date of publication of application: **24.09.2025**
(21) Application number: 25159716.7
(22) Date of filing: 24.02.2025
(51) Int. Cl.: F02D 19/08

(54) **FUEL SUPPLY DEVICE AND ENGINE SYSTEM**

(30) Priority: 18.03.2024 JP 2024042186
(71) Applicant: Yanmar Holdings Co., Ltd., Osaka-shi, Osaka (JP)
(72) Inventor: IZUMI, Naoto, Osaka (JP); ASAI, Go, Osaka (JP); TOSHINAGA, Kazuteru, Osaka (JP)
(74) Representative: Novagraaf International SA

(57) **Abstract**

[Problem] To provide a fuel supply device and an engine system capable of obtaining combustion stability by mixing a main fuel and a combustion improver at a molecular level.

[Solution] A fuel supply device 5, which is applied to an engine system 1 including an engine 2 that operates with a mixed fuel composed of a main fuel such as ammonia or an alcohol and a combustion improver made from a hydrocarbon-based liquid fuel such as light oil, kerosene, or heavy oil and supplies the mixed fuel to the engine 2, mixes a compatibilizer, the main fuel, and the combustion improver to produce the mixed fuel.

## Description

### TECHNICAL FIELD

The present invention relates to a fuel supply device that supplies a mixed fuel composed of a main fuel such as ammonia and a combustion improver made from a hydrocarbon-based liquid fuel such as light oil to an engine, and an engine system including the fuel supply device.

### BACKGROUND ART

Conventionally, there is an engine system that operates by supplying a mixed fuel composed of a main fuel such as ammonia and a combustion improver made from a hydrocarbon-based liquid fuel such as light oil to an engine.

For example, according to Patent Document 1, a manufacturing device for manufacturing an ammonia mixed fuel includes: an ammonia storage airtight container that stores liquefied ammonia; a combustion improver storage airtight container that stores a combustion improver for assisting combustion of ammonia; a mixing airtight container that is configured such that a mixture is obtained by stirring and mixing ammonia and the combustion improver with a stirrer and the mixture obtained by stirring and mixing with the stirrer can maintain a vapor-liquid equilibrium state; an ammonia introduction line that connects the ammonia storage airtight container to the mixing airtight container and is provided with an ammonia quantitative introduction mechanism configured to introduce a predetermined amount of ammonia into the mixing airtight container; a combustion improver introduction line that connects the combustion improver storage airtight container to the mixing airtight container and is provided with a combustion improver quantitative introduction mechanism configured to introduce a predetermined amount of the combustion improver from the combustion improver storage airtight container to the mixing airtight container; and at least one liquid phase discharge line configured to discharge the mixture obtained by stirring and mixing with the stirrer in the mixing airtight container as an ammonia mixed fuel from the mixing airtight container.

Moreover, the manufacturing device of Patent Document 1 is provided with a temperature adjustment mechanism configured to adjust the temperature of the mixture such that the saturated vapor pressure of the mixture in the mixing airtight container is within a temperature range that does not exceed the set pressure resistance of the mixing airtight container. Furthermore, the manufacturing device of Patent Document 1 includes: a surfactant storage container that stores a surfactant; and a surfactant introduction line that connects the surfactant storage container to the mixing airtight container and is provided with a surfactant quantitative introduction mechanism configured to introduce a predetermined amount of the surfactant into the mixing airtight container. In the mixing airtight container, the surfactant is stirred and mixed with the stirrer together with ammonia and the combustion improver, and the liquid phase discharge line discharges the mixture containing the surfactant.

### PRIOR ART DOCUMENT

### PATENT DOCUMENT

Patent Document 1: Japanese Unexamined Patent Publication No. 2022-171351

### SUMMARY OF INVENTION

### TECHNICAL PROBLEM

In the prior art disclosed in Patent Document 1, a surfactant is used to promote mixing of a main fuel and a combustion improver, but the main fuel and the combustion improver are only mixed macroscopically by the surfactant, and mixing of the main fuel and the combustion improver at a molecular level has not been achieved. Therefore, when a mixed fuel obtained by mixing the main fuel and the combustion improver using the surfactant is combusted in an engine, the combustion stability may be deteriorated.

Moreover, in the prior art disclosed in Patent Document 1, the property of the mixed fuel is tried to be maintained by adjusting the temperature of the main fuel, the combustion improver, or the mixed fuel by the temperature adjustment mechanism. However, the main fuel, the combustion improver, or the mixed fuel needs to be heated or cooled depending on the target temperature, there is a concern that the temperature adjustment mechanism becomes complicated and expensive.

An object of the present invention is to provide a fuel supply device and an engine system capable of obtaining combustion stability by mixing a main fuel and a combustion improver at a molecular level.

### SOLUTION TO PROBLEM

In order to solve the above-described problems, a fuel supply device of the present invention is a fuel supply device that supplies a mixed fuel composed of a main fuel and a combustion improver made from a hydrocarbon-based liquid fuel to an engine, in which the mixed fuel is produced by mixing a compatibilizer, the main fuel, and the combustion improver.

Moreover, an engine system of the present invention includes: the above-described fuel supply device; and the engine that operates with the mixed fuel.

### ADVANTAGEOUS EFFECTS OF INVENTION

According to the present invention, a fuel supply device and an engine system capable of obtaining combustion stability by mixing a main fuel and a combustion improver at a molecular level are provided.

### BRIEF DESCRIPTION OF DRAWINGS

FIG. 1 is a schematic diagram illustrating an example of an engine system according to an embodiment of the present invention.
FIG. 2 is a graph schematically illustrating a map showing a relationship between a mixing rate of ethanol as a main fuel and light oil as a combustion improver and a temperature of a mixed fuel.
FIG. 3 is a graph showing a relationship between a concentration of methanol as the main fuel in the mixed fuel and a concentration of dodecanol as a compatibilizer, which is added when the mixed fuel is completely mixed, for each temperature of the mixed fuel.
FIG. 4 is a schematic diagram illustrating another example of the engine system according to the embodiment of the present invention.

### DESCRIPTION OF EMBODIMENTS

An engine system 1 according to an embodiment of the present invention will be described with reference to the drawings. The engine system 1 includes an engine 2, an intake passage 3, an exhaust passage 4, and a fuel supply device 5.

The engine 2 operates with a mixed fuel composed of a main fuel such as ammonia or an alcohol and a combustion improver made from a hydrocarbon-based liquid fuel such as light oil, kerosene, or heavy oil. Although the engine 2 may be configured by, for example, a diesel engine, the engine 2 is not limited to the diesel engine and may be configured by another internal combustion engine (engine) as long as the engine 2 operates with the above-described mixed fuel.

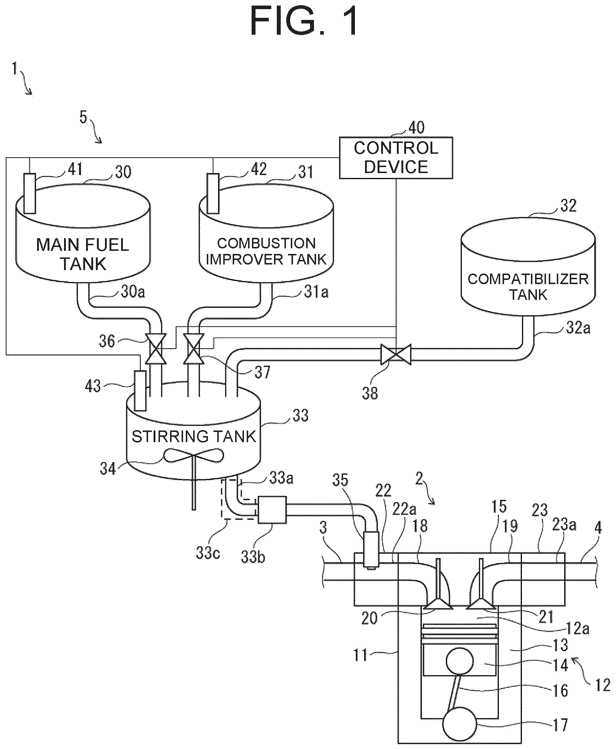

Although the engine 2 is configured such that a cylinder block 11 includes a plurality of cylinder engines 12, only one cylinder engine 12 is illustrated in FIG. 1. As illustrated in FIG. 1, each cylinder engine 12 is configured by a cylinder 13, a piston 14, and a cylinder head 15.

For example, the cylinder 13 is formed into a cylindrical shape in the cylinder block 11, and the piston 14 is slidably housed in the cylinder 13. The cylinder head 15 is attached to the upper side of the cylinder 13, and the cylinder 13 and the cylinder head 15 form a combustion chamber 12a inside thereof.

On the lower side of the cylinder 13, a crankshaft 17 is connected to the piston 14 via a connecting rod 16, and a reciprocating motion of the piston 14 is converted into a rotational motion of the crankshaft 17 via the connecting rod 16.

Moreover, the cylinder head 15 has an intake port 18 and an exhaust port 19 that communicate with the combustion chamber 12a of the cylinder 13, and includes an intake valve 20 and an exhaust valve 21 that open and close the intake port 18 and the exhaust port 19, respectively, with respect to the combustion chamber 12a.

The intake port 18 is connected to the intake passage 3 and introduces air supplied from the intake passage 3 to the combustion chamber 12a. The exhaust port 19 is connected to the exhaust passage 4 and discharges exhaust gas generated in the combustion chamber 12a to the exhaust passage 4. When the intake valve 20 is opened, mixture gas of fuel gas and air can be taken into the combustion chamber 12a through the intake port 18. On the other hand, when the exhaust valve 21 is opened, exhaust gas generated in the combustion chamber 12a can be discharged through the exhaust port 19.

In FIG. 1, in order to connect the intake passage 3 to the intake ports 18 of the plurality of cylinder engines 12, an example in which an intake manifold 22 having branch flow passages 22a that branch from the intake passage 3 to the plurality of cylinder engines 12 is provided between the intake passage 3 and the engine 2 is illustrated. Alternatively, the intake passage 3 and the intake ports 18 may be directly connected. In addition, in FIG. 1, when the exhaust passage 4 is connected to the exhaust ports 19 of the plurality of cylinder engines 12, an example in which an exhaust manifold 23 having branch flow passages 23a that branch from the exhaust passage 4 to the plurality of cylinder engines 12 is provided between the exhaust passage 4 and the engine 2 is illustrated. Alternatively, the exhaust passage 4 and the exhaust ports 19 may be directly connected.

The intake passage 3 allows compressed and cooled air to flow in an intake direction, and supplies the air to each cylinder engine 12 through the intake port 18 of each cylinder engine 12 of the engine 2. The exhaust passage 4 allows exhaust gas generated in each cylinder engine 12 of the engine 2 and discharged through the exhaust port 19 to flow in an exhaust direction and to be discharged.

The fuel supply device 5 supplies a mixed fuel composed of a main fuel and a combustion improver to the engine 2. The fuel supply device 5 includes a main fuel tank 30, a combustion improver tank 31, a compatibilizer tank 32, a stirring tank 33, a stirrer 34, a mixed fuel injection device 35, a main fuel supply valve 36, a combustion improver supply valve 37, a compatibilizer supply valve 38 (compatibilizer supply unit), a control device 40, a main fuel temperature sensor 41, a combustion improver temperature sensor 42, and a mixed fuel temperature sensor 43.

The main fuel tank 30 contains a main fuel made from a liquid fuel such as ammonia or an alcohol. The main fuel tank 30 is connected to the stirring tank 33 through a main fuel flow passage 30a, and the main fuel in the main fuel tank 30 is supplied to the stirring tank 33 through the main fuel flow passage 30a by a main fuel pump (not illustrated) or the like.

The combustion improver tank 31 contains a combustion improver made from a hydrocarbon-based liquid fuel such as light oil, kerosene, or heavy oil. The combustion improver tank 31 is connected to the stirring tank 33 through a combustion improver flow passage 31a, and the combustion improver in the combustion improver tank 31 is supplied to the stirring tank 33 through the combustion improver flow passage 31a by a combustion improver pump (not illustrated) or the like.

The compatibilizer tank 32 contains a compatibilizer for promoting mixing of the main fuel and the combustion improver. Examples of the compatibilizer include higher alcohols such as dodecanol, n-butanol, i-butanol, pentanol, and octanol, and ethers such as dimethyl ether (DME). The compatibilizer tank 32 is connected to the stirring tank 33 through a compatibilizer flow passage 32a, and the compatibilizer in the compatibilizer tank 32 is supplied to the stirring tank 33 through the compatibilizer flow passage 32a by a compatibilizer pump (not illustrated) or the like.

The stirring tank 33 is a stirring container in which the main fuel and the combustion improver in a liquid state are stirred and mixed to produce a mixed fuel in a liquid state composed of the main fuel and the combustion improver. To the stirring tank 33, the main fuel and the combustion improver are supplied from the main fuel tank 30 and the combustion improver tank 31, respectively, and the compatibilizer is further supplied from the compatibilizer tank 32. The stirrer 34 that stirs the main fuel and the combustion improver in a liquid state is provided inside the stirring tank 33. The stirrer 34 operates by the control of the control device 40, and stirs the main fuel, the combustion improver, and the compatibilizer in the stirring tank 33.

The stirring tank 33 is connected to the mixed fuel injection device 35 through a mixed fuel flow passage 33a, and the mixed fuel in the stirring tank 33 is supplied to the mixed fuel injection device 35 through the mixed fuel flow passage 33a by a mixed fuel pump 33b such as a feed pump. The mixed fuel pump 33b is arranged on the upstream side of the mixed fuel injection device 35 and on the downstream side of the stirring tank 33 in a flow direction of the mixed fuel in the mixed fuel flow passage 33a.

At this time, the mixed fuel produced by stirring and mixing the main fuel, the combustion improver, and the compatibilizer is supplied to the mixed fuel injection device 35 without being stored in the stirring tank 33. For example, the main fuel, the combustion improver, and the compatibilizer are supplied to the stirring tank 33 per unit time by the amount corresponding to the supply amount per unit time of the mixed fuel by the mixed fuel injection device 35, and are stirred and mixed, so that the storage of the mixed fuel is reduced. Thus, the mixed fuel is supplied to the mixed fuel injection device 35 before the temperature of the mixed fuel changes in the stirring tank 33.

Moreover, the stirring tank 33 and the mixed fuel pump 33b are arranged such that the temperature change of the mixed fuel from an outlet of the stirring tank 33 to an inlet of the mixed fuel pump 33b is maintained within a predetermined range (for example, ±5°C) in the flow direction of the mixed fuel in the mixed fuel flow passage 33a. For example, the stirring tank 33 is arranged near the mixed fuel pump 33b, and specifically, a portion of the mixed fuel flow passage 33a from the stirring tank 33 to the mixed fuel pump 33b is set within a predetermined length. In addition to or instead of the above, a heat-retaining unit 33c is included in the portion of the mixed fuel flow passage 33a from the stirring tank 33 to the mixed fuel pump 33b. For example, the heat-retaining unit 33c may be configured by a heat insulating material, or may be configured by using heat of exhaust gas or a coolant.

The mixed fuel injection device 35 supplies the mixed fuel to the combustion chamber 12a of the engine 2. The mixed fuel injection device 35 is configured to be able to adjust the supply amount of the mixed fuel by being controlled by the control device 40. The mixed fuel injection device 35 is provided, for example, in the cylinder head 15 of the engine 2, and injects the mixed fuel directly into the combustion chamber 12a.

Alternatively, the mixed fuel injection device 35 may be provided in the intake port 18 that communicates with the combustion chamber 12a of the engine 2, and may supply the mixed fuel to the combustion chamber 12a through the intake port 18 by injecting the mixed fuel into the intake port 18. Alternatively, the mixed fuel injection device 35 may be provided in the intake manifold 22 that communicates with the intake port 18 of the engine 2, and may supply the mixed fuel to the combustion chamber 12a through the intake manifold 22 and the intake port 18 by injecting the mixed fuel into the intake manifold 22.

The main fuel supply valve 36 is provided in the main fuel flow passage 30a, and is configured to be able to adjust the amount of the main fuel supplied from the main fuel tank 30 to the stirring tank 33 by being controlled by the control device 40. The combustion improver supply valve 37 is provided in the combustion improver flow passage 31a, and is configured to be able to adjust the amount of the combustion improver supplied from the combustion improver tank 31 to the stirring tank 33 by being controlled by the control device 40. The compatibilizer supply valve 38 (compatibilizer supply unit) is provided in the compatibilizer flow passage 32a, and is configured to be able to adjust the amount of the compatibilizer supplied from the compatibilizer tank 32 to the stirring tank 33 by being controlled by the control device 40.

The control device 40 is a computer such as an engine control unit (ECU) that controls the operation of the engine 2, includes a CPU, a ROM, a RAM, and the like, and is configured to control each unit of the engine 2. The control device 40 may store various programs for controlling the engine 2, and control the engine 2 by reading out and executing a program.

The main fuel temperature sensor 41 is a temperature detection unit that is provided in the main fuel tank 30 or the main fuel flow passage 30a and detects the temperature of the main fuel to be supplied to the stirring tank 33. The main fuel temperature sensor 41 transmits the temperature detection result of the main fuel to the control device 40. The combustion improver temperature sensor 42 is a temperature detection unit that is provided in the combustion improver tank 31 or the combustion improver flow passage 31a and detects the temperature of the combustion improver to be supplied to the stirring tank 33. The combustion improver temperature sensor 42 transmits the temperature detection result of the combustion improver to the control device 40. The mixed fuel temperature sensor 43 is a temperature detection unit that is provided in the stirring tank 33 or the mixed fuel flow passage 33a and detects the temperature of the mixed fuel to be supplied from the stirring tank 33. The mixed fuel temperature sensor 43 transmits the temperature detection result of the mixed fuel to the control device 40.

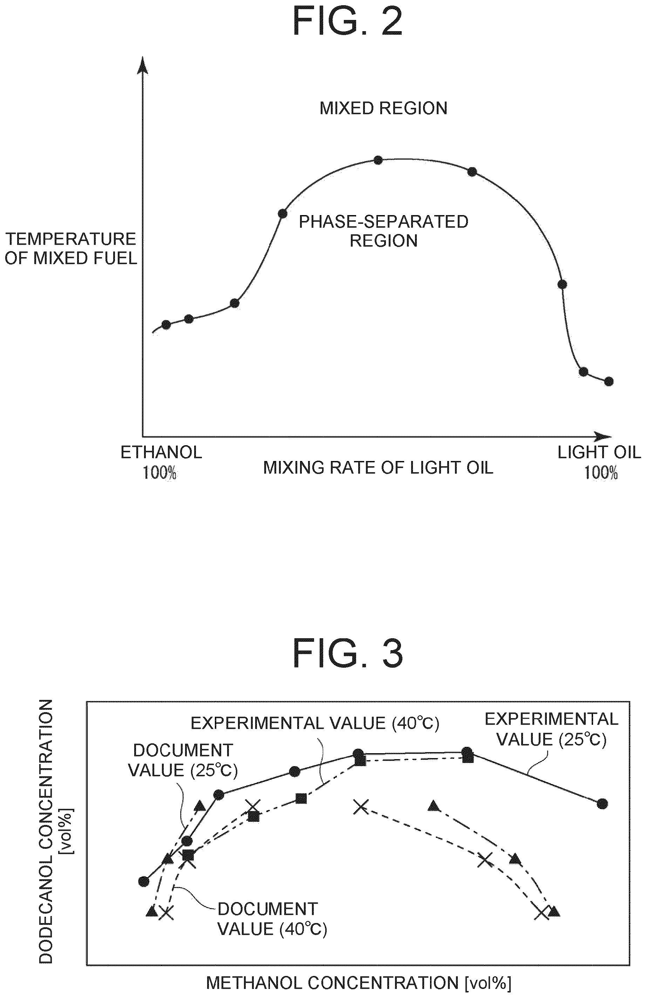

Next, the supply of the compatibilizer with respect to the mixed fuel composed of the main fuel and the combustion improver will be described. When the main fuel and the combustion improver are simply mixed, phase separation may occur due to the characteristics of the molecular structure, and the main fuel and the combustion improver may not be mixed well. For example, FIG. 2 schematically illustrates, in a map showing a relationship between a mixing rate of ethanol as the main fuel and light oil as the combustion improver and a temperature of the mixed fuel, a mixed region in which a good mixed fuel can be obtained and a phase-separated region in which phase separation occurs in the mixed fuel. In the map, a temperature at which a good mixed fuel can be obtained, that is, a melting temperature limit is illustrated by a line graph with respect to the mixing rate of the main fuel and the combustion improver. According to the map, it can be seen that separation is most likely to occur when the mixing rate of the main fuel and the combustion improver is around 50%, and separation is less likely to occur as the rate of the main fuel or the combustion improver increases. Moreover, according to the map, it can be seen that separation is more likely to occur when the temperature of the mixed fuel is lower, and separation is less likely to occur when the temperature of the mixed fuel is higher. In other words, the upper limit of the concentration of the main fuel or the combustion improver to be phase-separated depends on the temperature of the mixed fuel.

On the other hand, it is known that the phase separation property of the mixed fuel can be reduced, for example, the melting temperature limit can be reduced by adding a compatibilizer such as a higher alcohol to the mixed fuel. For example, FIG. 3 illustrates a graph showing a relationship between a concentration of methanol as the main fuel in the mixed fuel and a concentration of dodecanol as the compatibilizer, which is added when the mixed fuel is completely mixed, for each temperature of the mixed fuel. According to the graph, it can be seen that the concentration (supply amount) of the compatibilizer needs to be increased as the concentration (mixing rate) of the main fuel approaches 50%, and the concentration of the compatibilizer can be decreased as the concentration of the main fuel deviates from 50%. Moreover, according to the graph, it can be seen that the concentration of the compatibilizer required for complete mixing of the mixed fuel can be decreased when the temperature of the mixed fuel becomes higher.

Therefore, the control device 40 functions as a supply amount determination unit 40a that determines the supply amount of the compatibilizer on the basis of the mixing rate of the main fuel or the combustion improver and the temperature detection result by the temperature detection unit. For example, the supply amount determination unit 40a determines the supply amount of the compatibilizer to be larger as the mixing rate of the main fuel or the combustion improver approaches 50%.

Furthermore, particularly in the present embodiment, the supply amount determination unit 40a determines the amount of the compatibilizer added to the mixed fuel, that is, the supply amount by the compatibilizer supply valve 38 (compatibilizer supply unit) on the basis of at least one of the temperature detection result of the main fuel by the main fuel temperature sensor 41, the temperature detection result of the combustion improver by the combustion improver temperature sensor 42, and the temperature detection result of the mixed fuel by the mixed fuel temperature sensor 43. At this time, the supply amount determination unit 40a determines the supply amount of the compatibilizer to be smaller as the temperature of the main fuel, the combustion improver, or the mixed fuel is higher. The supply amount determination unit 40a may calculate or estimate the temperature of the mixed fuel on the basis of the temperatures of the main fuel and the combustion improver.

As described above, according to the present invention, the fuel supply device 5, which is applied to the engine system 1 including the engine 2 that operates with the mixed fuel composed of the main fuel such as ammonia or an alcohol and the combustion improver made from a hydrocarbon-based liquid fuel such as light oil, kerosene, or heavy oil and supplies the mixed fuel to the engine 2, adds the compatibilizer to promote mixing of the main fuel and the combustion improver to produce the mixed fuel.

Thus, according to the fuel supply device 5 of the present invention, the main fuel and the combustion improver can be mixed at a molecular level by using the compatibilizer, and the combustion stability of the mixed fuel can be obtained.

The fuel supply device 5 of the present invention includes the temperature detection unit that detects at least one temperature of the temperature of the main fuel, the temperature of the combustion improver, and the temperature of the mixed fuel (the main fuel temperature sensor 41, the combustion improver temperature sensor 42, and the mixed fuel temperature sensor 43), the supply amount determination unit 40a of the control device 40 that determines the supply amount of the compatibilizer on the basis of the temperature detection result by the temperature detection unit, and the compatibilizer supply valve 38 (compatibilizer supply unit) that supplies the compatibilizer by the supply amount determined by the supply amount determination unit 40a.
Thus, although the amount of the compatibilizer required for mixing the main fuel and the combustion improver varies depending on the temperatures of the main fuel, the combustion improver, and the mixed fuel, an appropriate amount of the compatibilizer can be supplied for mixing the main fuel and the combustion improver with a relatively simple configuration. Therefore, a special device for maintaining the main fuel and the combustion improver at constant temperatures does not need to be provided, and a complicated and expensive configuration can be avoided.

The fuel supply device 5 of the present invention includes the main fuel tank 30 that contains the main fuel, the combustion improver tank 31 that contains the combustion improver, the stirrer 34 that stirs the main fuel and the combustion improver, and the stirring tank 33 that is a stirring container having the stirrer 34, the main fuel and the combustion improver are supplied to the stirring tank 33 from the main fuel tank 30 and the combustion improver tank 31, respectively, and the compatibilizer by the determined supply amount is supplied to the stirring tank 33 by the compatibilizer supply valve 38. Thus, the main fuel and the combustion improver can be mixed using the compatibilizer with a simple configuration using the stirrer 34 and the stirring tank 33.

The fuel supply device 5 of the present invention includes the mixed fuel injection device 35 for supplying the mixed fuel to the engine 2, and the mixed fuel produced by being stirred in the stirring tank 33 is supplied to the mixed fuel injection device 35 without being stored in the stirring tank 33. Thus, since the mixed fuel can be supplied to the mixed fuel injection device 35 and combusted in the engine 2 before the temperature change of the mixed fuel occurs, the amount of the compatibilizer required for mixing does not change due to the temperature change of the mixed fuel, and the combustion stability can be obtained while maintaining a good mixed state.

The fuel supply device 5 of the present invention includes the mixed fuel pump 33b that is arranged on the upstream side of the mixed fuel injection device 35 and on the downstream side of the stirring tank 33 in the flow direction of the mixed fuel and pressure-feeds the mixed fuel to the mixed fuel injection device 35, and, in order to maintain the temperature change of the mixed fuel from the stirring tank 33 to the mixed fuel pump 33b within a predetermined range in the flow direction, the stirring tank 33 is arranged near the mixed fuel pump 33b, and/or the heat-retaining unit 33c is included in the mixed fuel flow passage 33a from the stirring tank 33 to the mixed fuel pump 33b. Thus, since the mixed fuel can be supplied to the mixed fuel injection device 35 and combusted in the engine 2 before the temperature change of the mixed fuel occurs, the amount of the compatibilizer required for mixing does not change due to the temperature change of the mixed fuel, and the combustion stability can be obtained while maintaining a good mixed state.

In the fuel supply device 5 of the present invention, examples of the compatibilizer include higher alcohols such as dodecanol, n-butanol, i-butanol, pentanol, and octanol, and ethers such as dimethyl ether (DME). Thus, by applying the compatibilizer suitable for the main fuel and the combustion improver, the main fuel and the combustion improver can be more reliably mixed at a molecular level.

In the above-described embodiment, an example in which the main fuel flow passage 30a and the combustion improver flow passage 31a are separately connected to the stirring tank 33 has been described. However, the present invention is not limited to the example, and the main fuel flow passage 30a and the combustion improver flow passage 31a may be joined and then connected to the stirring tank 33.

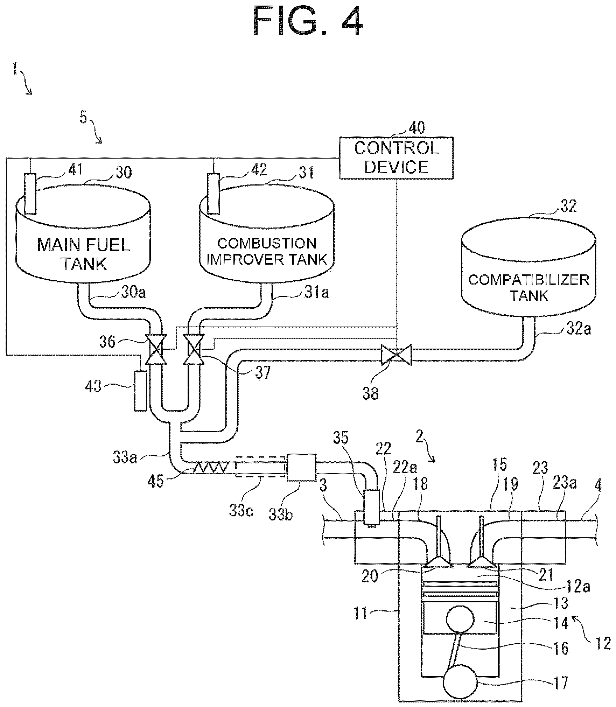

Moreover, in the above-described embodiment, an example in which the fuel supply device 5 includes the stirring tank 33 as a stirring container that stirs and mixes the main fuel and the combustion improver to produce the mixed fuel has been described. However, the present invention is not limited to the example. In another example, as illustrated in FIG. 4, the fuel supply device 5 may include a fixed mixer 45 such as a static mixer as a stirring container instead of the stirring tank 33 and the stirrer 34.

In this case, the fuel supply device 5 is configured such that the main fuel flow passage 30a and the combustion improver flow passage 31a are joined to the mixed fuel flow passage 33a, and the fixed mixer 45 is provided in the mixed fuel flow passage 33a on the downstream side of the joining point of the main fuel flow passage 30a and the combustion improver flow passage 31a in the flow direction of the mixed fuel. The fixed mixer 45 operates in accordance with the flow of the mixed fuel in the mixed fuel flow passage 33a to perform stirring and mixing. Moreover, the compatibilizer flow passage 32a is configured to be joined to the mixed fuel flow passage 33a on the downstream side of the joining point of the main fuel flow passage 30a and the combustion improver flow passage 31a and on the upstream side of the fixed mixer 45 in the flow direction of the mixed fuel. Thus, the compatibilizer is added to the mixed fuel of the main fuel and the combustion improver, and the mixed fuel of the main fuel, the combustion improver, and the compatibilizer is stirred and mixed by the fixed mixer 45.

The present invention can be appropriately modified within a range that does not contradict the gist or concept of the invention that can be read throughout the claims and the specification, and a fuel supply device and an engine system with such modifications are also included in the technical concept of the present invention.

### [Supplementary Notes of the Invention]

Hereinafter, an outline of the invention extracted from the above-described embodiment will be supplementarily described. Configurations and processing functions described in the following supplementary notes can be appropriately selected and combined.

### <Supplementary Note 1>

A fuel supply device that supplies a mixed fuel composed of a main fuel and a combustion improver made from a hydrocarbon-based liquid fuel to an engine, in which
the mixed fuel is produced by mixing a compatibilizer, the main fuel, and the combustion improver.

### <Supplementary Note 2>

The fuel supply device according to supplementary note 1, including:
a temperature detection unit that detects at least one temperature of a temperature of the main fuel, a temperature of the combustion improver, and a temperature of the mixed fuel;
a supply amount determination unit that determines a supply amount of the compatibilizer on the basis of a temperature detection result by the temperature detection unit; and
a compatibilizer supply unit that supplies the compatibilizer by the supply amount determined by the supply amount determination unit.

### <Supplementary Note 3>

The fuel supply device according to supplementary note 2, including:
a main fuel tank that contains the main fuel;
a combustion improver tank that contains the combustion improver;
a stirrer that stirs the main fuel and the combustion improver; and
a stirring container having the stirrer, in which
the main fuel and the combustion improver are supplied to the stirring container from the main fuel tank and the combustion improver tank, respectively, and the compatibilizer by the determined supply amount is supplied to the stirring container by the compatibilizer supply unit.

### <Supplementary Note 4>

The fuel supply device according to supplementary note 3, including:
a mixed fuel injection device for supplying the mixed fuel to the engine, in which
the mixed fuel produced by being stirred in the stirring container is supplied to the mixed fuel injection device without being stored in the stirring container.

### <Supplementary Note 5>

The fuel supply device according to supplementary note 4, including:
a mixed fuel pump that is arranged on an upstream side of the mixed fuel injection device and on a downstream side of the stirring container in a flow direction of the mixed fuel and pressure-feeds the mixed fuel to the mixed fuel injection device, in which,
in the flow direction, the stirring container is arranged near the mixed fuel pump, and/or a heat-retaining unit is included in a flow passage from the stirring container to the mixed fuel pump.

### <Supplementary Note 6>

The fuel supply device according to any one of supplementary notes 1 to 5, in which the main fuel is ammonia or an alcohol.

### <Supplementary Note 7>

The fuel supply device according to any one of supplementary notes 1 to 6, in which the compatibilizer is a higher alcohol or an ether.

<Supplementary Note 8>

An engine system including:
the fuel supply device according to any one of supplementary notes 1 to 7; and
the engine that operates with the mixed fuel.

### REFERENCE SIGNS LIST

1 engine system
2 engine
3 intake passage
4 exhaust passage
5 fuel supply device
12 cylinder engine
12a combustion chamber
18 intake port
19 exhaust port
22 intake manifold
22a branch flow passage
23 exhaust manifold
23a branch flow passage
30 main fuel tank
30a main fuel flow passage
31 combustion improver tank
31a combustion improver flow passage
32 compatibilizer tank
32a compatibilizer flow passage
33 stirring tank
33a mixed fuel flow passage
33b mixed fuel pump
33c heat-retaining unit
34 stirrer
35 mixed fuel injection device
36 main fuel supply valve
37 combustion improver supply valve
38 compatibilizer supply valve
40 control device
40a supply amount determination unit
41 main fuel temperature sensor
42 combustion improver temperature sensor
43 mixed fuel temperature sensor
45 fixed mixer

## Claims

1. A fuel supply device that supplies a mixed fuel composed of a main fuel and a combustion improver made from a hydrocarbon-based liquid fuel to an engine, wherein
the mixed fuel is produced by mixing a compatibilizer, the main fuel, and the combustion improver.

2. The fuel supply device according to claim 1, comprising:
a temperature detection unit that detects at least one temperature of a temperature of the main fuel, a temperature of the combustion improver, and a temperature of the mixed fuel;
a supply amount determination unit that determines a supply amount of the compatibilizer on the basis of a temperature detection result by the temperature detection unit; and
a compatibilizer supply unit that supplies the compatibilizer by the supply amount determined by the supply amount determination unit.

3. The fuel supply device according to claim 2, comprising:
a main fuel tank that contains the main fuel;
a combustion improver tank that contains the combustion improver;
a stirrer that stirs the main fuel and the combustion improver; and
a stirring container having the stirrer, wherein
the main fuel and the combustion improver are supplied to the stirring container from the main fuel tank and the combustion improver tank, respectively, and the compatibilizer by the determined supply amount is supplied to the stirring container by the compatibilizer supply unit.

4. The fuel supply device according to claim 3, comprising:
a mixed fuel injection device for supplying the mixed fuel to the engine, wherein
the mixed fuel produced by being stirred in the stirring container is supplied to the mixed fuel injection device without being stored in the stirring container.

5. The fuel supply device according to claim 4, comprising:
a mixed fuel pump that is arranged on an upstream side of the mixed fuel injection device and on a downstream side of the stirring container in a flow direction of the mixed fuel and pressure-feeds the mixed fuel to the mixed fuel injection device, wherein,
in the flow direction, the stirring container is arranged near the mixed fuel pump, and/or a heat-retaining unit is included in a flow passage from the stirring container to the mixed fuel pump.

6. The fuel supply device according to claim 1, wherein the main fuel is ammonia or an alcohol.

7. The fuel supply device according to claim 1, wherein the compatibilizer is a higher alcohol or an ether.

8. An engine system comprising:
the fuel supply device according to claim 1; and
the engine that operates with the mixed fuel.
